# EUROPÄISCHE PATENTSCHRIFT

(11) **EP 4 217 296 B1**
(45) Veröffentlichungstag und Bekanntmachung des Hinweises auf die Patenterteilung: **06.11.2024**
(21) Anmeldenummer: 21798286.7
(22) Anmeldetag: 01.09.2021
(51) Int. Cl.: B65G 27/32, B65G 43/02

(54) **VERFAHREN ZUR BERECHNUNG VON SCHÜTTGUTFÖRDERMENGEN ODER SCHÜTTGUTBELADUNGEN EINER SCHWINGMASCHINE**
METHOD FOR CALCULATING BULK MATERIAL CONVEYING RATES OR BULK MATERIAL LOADS OF A VIBRATORY MACHINE
PROCÉDÉ DE CALCUL DE DÉBITS DE TRANSPORT DE MATIÈRES EN VRAC OU DE CHARGES DE MATIÈRES EN VRAC D'UNE MACHINE VIBRANTE

(30) Priorität: 25.09.2020 DE 102020124997
(43) Veröffentlichungstag der Anmeldung: 02.08.2023
(73) Patentinhaber: Sandvik Rock Processing Australia Pty Limited, North Ryde, NSW 2113 (AU)
(72) Erfinder: SCHAEFER, Jan, 64293 Darmstadt (DE); RAIS, Viktor, 64293 Darmstadt (DE)
(74) Vertreter: WSL Patentanwälte Partnerschaft mbB
(86) Internationale Anmeldenummer: PCT/EP2021/074067
(87) Internationale Veröffentlichungsnummer: WO 2022/063532

(56) Entgegenhaltungen:
- CN-A- 109 255 496
- JP-A- 2011 084 396
- JP-A- H06 316 337

## Beschreibung

Die Erfindung betrifft ein Verfahren zur Berechnung von Schüttgutfördermengen oder Schüttgutbeladungen einer Schwingmaschine.

Schwingmaschinen oder Schwingfördermaschinen, wie Schwingsiebe oder Schwingförderer, umfassen üblicherweise einen beweglichen Schwingkörper, der eine Siebfläche oder Förderfläche umfasst, sowie einen festen Tragrahmen gegenüber dem der bewegliche Schwingkörper gelagert ist. Derartige Schwingmaschinen werden für die Klassifizierung und den Transport von Schüttgütern verwendet, um diese beispielsweise aus einem Vorrat oder einem Bunker an eine Stelle zu bringen, an der das Schüttgut weiterverarbeitet wird.

Zum Antrieb bzw. zum Bewegen des Schwingkörpers kommen einerseits magnetische Schwingantriebe oder andererseits sogenannte Unwuchterreger zum Einsatz. Unwuchterreger weisen rotierende Unwuchten oder Gewichte auf, die ihre Beschleunigungskräfte auf den Schwingkörper übertragen um diesen in Schwingung zu versetzen. Unwuchterreger, die eine gerichtete Bewegung des Schwingkörpers hervorrufen werden als Richterreger bezeichnet.

Die Regelung und/oder Steuerung der Förderleistung bzw. des Austrags einer Schwingmaschine ist aufgrund der vielen zu berücksichtigenden Parameter wie Antriebsfrequenz, Schwingungsamplitude, Schwingwinkel etc. eine nicht einfach zu lösenden Aufgabe.

Hierbei ist die Gewichtserfassung der Fördermenge für den Kunden eine werthaltige Information, um die Förderleistung der Schwingmaschine ermitteln und steuern bzw. regeln zu können. Dadurch können Arbeitspotentiale der Schwingmaschine voll ausgenutzt und Überlastungen verhindert werden.

Eine Vorrichtung und ein Verfahren zur Einstellung der Schüttgutmenge auf einer Förderrinne einer Schwingmaschine ist beispielsweise aus der DE 103 01 143 A1 bekannt.

Hier ist eine Siebmaschine über vier Federelemente gegenüber ihrem Aufstandsrahmen gelagert. Zwischen den Federelementen und dem Aufstandsrahmen sind vier Wägebalken oder Wägezellen als Lastaufnehmer für die Ermittlung der Beladung der Förderinne angeordnet. Über diese Wägezellen soll kontinuierlich das Ist-Gewicht der Schwingmaschine und der vorhandenen Beladung ermittelt und mit einem Referenzwert verglichen werden.

Eine Gewichtserfassung des geförderten Schüttgutmaterials gestaltet sich aufgrund der Schwingbewegungen, deren Schwingungen im Resonanzbereich der Schwingmaschine liegen können, schwierig. Eine Erfassung des Gewichts mittels Wägezellen, Kraftsensoren mit applizierten Dehnungsmessstreifen, die auf Basis ihrer Verformung ein dem Gewicht proportionales elektrisches Signal erzeugen, ist daher nicht ohne weiteres möglich.

Ein weiteres Verfahren zur Regelung des Austrags einer Schwingrinne ist aus der EP 1 188 695 A1 bekannt. Hier werden mittels Beschleunigungssensoren die vertikale Beschleunigung der Schwingrinne und zusätzlich deren Antriebsfrequenz gemessen, um aus diesen Werten auf eine Ist-Förderleistung schließen zu können.

Bei diesem Verfahren ist es jedoch notwendig, den Zusammenhang zwischen vertikaler Beschleunigung, Antriebsfrequenz und der entsprechenden Ist-Förderleistung beispielsweise in Form einer Funktion für jede Schwingmaschine individuell empirisch oder theoretisch zu ermitteln. JP 2011 084396 A offenbart ein Verfahren gemäß dem Oberbegriff des Anspruchs 1, sowie eine Vorrichtung gemäß dem Oberbegriff des Anspruchs 10.

Aufgabe der vorliegenden Erfindung ist es daher, die Ermittlung der Schüttgutfördermenge einer Schwingmaschine zu verbessern und zu vereinfachen.

Diese Aufgabe wird gelöst durch ein Verfahren gemäß Patentanspruch 1 und einer Vorrichtung gemäß Patentanspruch 10. Vorteilhafte Ausgestaltungen der Erfindung ergeben sich aus den Unteransprüchen.

Mit der Erfindung wird eine Verfahren zur Bestimmung oder Berechnung von Schüttgutfördermenge oder Schüttgutbeladung einer Schwingmaschine bereitgestellt, bei dem zunächst Rohmessdaten der Schwingmaschine mit wenigstens einem Beschleunigungs-, Geschwindigkeits- oder Wegsensor erfasst werden.

Unter einer Schwingmaschine im Sinne der Erfindung werden dabei

Schwingfördermaschinen wie Schwingsiebe oder Schwingförderinnen verstanden.

Während bei Schwingsieben die Materialdicke des zu fördernden Schüttguts auf dem Siebbelag längs der Förderrichtung durch fortlaufende Siebung abnimmt, bleibt die Materialdicke bei Schwingförderrinnen grundsätzlich gleich. In Folge der Änderung der Materialdicke verändert sich auch die Lage des Schwerpunkts eines Schwingsiebes. Trotz gleichbleibender Antriebsbedingungen, wie beispielsweise einem stationärem Stoßwinkel und stationärer Statorfrequenz des Motors, ändert sich durch Verlagerung des Schwerpunktes der Abstand zur Stoßachse, wodurch sich wiederum eine Änderung der "Nickbewegung" ergibt. Im Zuge der Änderung der Materialdicke und der Verlagerung des Schwerpunktes ändern sich somit auch die Amplitude sowie die Phase der Längsbeschleunigung. Zudem beeinflusst die Masse der Schüttgutbeladung oder absolute Belademenge beispielsweise den "resultant stroke" oder maximalen Hub der Schwingmaschine. Weiterhin beeinflusst die Lastverteilung des Schüttguts auf der Ladefläche oder Transportfläche den "longitudinal stroke" oder Hub in Längsrichtung der Schwingmaschine. Demgegenüber beeinflusst die Lastverteilung des Schüttguts jedoch den "lateral stroke" oder (horizontalen) lateralen Hub der Schwingmaschine nicht.

Weiterhin besteht ein Zusammenhang zwischen der Beladung und der Drehgeschwindigkeit des Rotors bzw. der Unwuchterreger, da eine erhöhte träge Masse den Fliehkräften der Erreger entgegenwirkt und daher zu einem erhöhten Trägheitsmoment an der Antriebswelle führt.

Die Anmelderin hat dementsprechend festgestellt, dass zur Ermittlung der Schüttgutfördermenge oder Schüttgutbeladung einer Schwingmaschine kein fixer Algorithmus herangezogen werden kann. Vielmehr ist ein lernender KI-Algorithmus erforderlich, um die individuellen Charakteristiken einer Schwingmaschine, die deren Schwingungsverhalten beeinflussen, berücksichtigen zu können. Unter anderem fließen hier die Masse der Schwingmaschine, deren Geometrie, der Siebbelag und/oder spezifische Schüttgutcharakteristiken mit in die Betrachtung ein.

Um das individuelle Schwingverhalten einer Schwingmaschine berücksichtigen zu können, werden daher bei dem erfindungsgemäßen Verfahren -je nach gewähltem Sensor- die Rohmessdaten: Beschleunigung, Geschwindigkeit oder Weg für wenigstens zwei voneinander verschiedene Beladezustände der Schwingmaschine erfasst. Von Interesse kann beispielsweise eine Messung bei 0 % Beladung sein, wenn sich kein Schüttgut auf der Schwingmaschine befindet und eine Messung bei 100% Beladung, wenn die Nominallast der Schwingmaschine erreicht ist. Diese Rohmessdaten werden mittels einer elektronischen Auswerteeinheit in einem Rechenvorgang in wenigstens ein Merkmal aus der Liste: Amplitude, Frequenz, Phase verarbeitet.

Anschließend werden aus den derart gewonnen Merkmalen, sogenannte Merkmalsdatensätze erstellt. Diese Merkmalsdatensätze können aus nur einem oder einer Anzahl von Merkmalen aus der Liste: Amplitude, Frequenz und/oder Phase bestehen. Diese Merkmalsdatensätze oder Schwingungssignale werden gespeichert und stehen somit einer nachfolgenden Auswertung zur Verfügung.

Hierbei ist von Bedeutung, dass die Merkmalsdatensätze, die aus einer Schwingmaschine A resultieren, auch nur für Auswertungen dieselbe Schwingmaschine A betreffend, verwendet werden.

Untersuchungen der Anmelderin haben gezeigt, dass die Rohmessdaten oder dementsprechend die Merkmalsdatensätze oder Schwingungssignale mit der Belademenge der Schwingmaschine in Wechselwirkung stehen. Daher werden bei dem erfindungsgemäßen Verfahren aus den Merkmalsdatensätzen oder Schwingungssignalen diejenigen Indikatoren gewonnen oder herausgefiltert, die eine hohe Korrelation mit einem Referenzsignal der Schüttgutfördermenge oder Schüttgutbeladung aufweisen.

Auf Basis der gespeicherten Merkmalsdatensätze, die jeweils die Korrelation von Beladung und Schwingverhalten aufzeigen, wird dann ein Klassifizierungsmodell oder Regressionsmodell erstellt und/oder trainiert. Bei dem Klassifizierungsmodell oder Regressionsmodell werden dabei die aus den Merkmalsdatensätzen gewonnenen Indikatoren als Eingangsvariablen und eine entsprechende Lastangabe, Beladungsinformation -beispielsweise 0% und 100% Beladung- oder ein Referenzsignal als Reaktionsvariable angenommen.

Falls als Reaktionsvariable lediglich eine Beladungsinformation 0-100 % dient, kann das Regressionsmodell eine Absolute Beladung zumindest in % schätzen/berechnen. Auch diese Information ist bereits wertvoll, um Über- oder Unterlast einer Schwingmaschine zu detektieren.

Erfindungsgemäß kann als Reaktionsvariable ein Referenzsignal oder Referenzlastsignal dienen. Dieses Referenzsignal, kann beispielsweise ein Kraftmesssignal oder ein Motorstromsignal sein, das aus einem vorgeschalteten, alternativen oder indirekten Messvorgang der Schüttgutfördermenge oder Schüttgutbeladung resultiert. Beispielsweise kann das Referenzlastsignal durch vorheriges Wiegen des Schüttguts mittels einer Behälterwaage oder einer gravimetrischen Dosiereinrichtung gewonnen werden.

Alternativ kann ein Merkmal des Beschleunigungs-, Geschwindigkeits-, Wegsensors selbst als Referenzsignal verwendet werden.

Mittels des erfindungsgemäßen Verfahrens wird ein multivariantes Klassifizierungsmodell oder Regressionsmodell erzeugt, das die Indikatoren der Merkmalsdatensätze in linearer und/oder nichtlinearer Form und gegebenenfalls unter Einbeziehung von Koeffizienten berücksichtigt.

Auf Basis des Regressionsmodells wird aufgrund eines großen Anteils gemeinsamer Varianz zwischen zwei Variablen und der Kenntnis eines Messwerts oder Referenzwerts die Vorhersage eines anderen Messwerts ermöglicht.

Anschließend kann das so gewonnene Klassifizierungsmodell oder Regressionsmodell derart in eine elektronische Auswertevorrichtung implementiert werden, dass auf Basis von aktuell gemessenen Rohmessdaten oder Schwingungsdaten die Ist-Belademenge der Schwingmaschine ermittelt und/ oder angezeigt werden kann.

Eine Ausgestaltung des Verfahrens sieht vor, dass der Schritt "Erstellen des Klassifizierungs- oder Regressionsmodells" nach einem Zeitraum Δt, nach dem Auftreten von Verschleiß an der Schwingfördermaschine, nach Instandhaltungsmaßnahmen und/oder nach sonstigen Systemänderungen wie Änderung der Beladung, der Maschinenkomponenten, der Antriebseigenschaften oder Materialeigenschaften wiederholt wird. Damit wird sichergestellt, dass das erstellte Regressionsmodell fortwährend an veränderte Randbedingungen angepasst werden kann. Häufig ist eine Veränderung des Schwingverhaltens einer Schwingmaschine oder Schwingfördermaschine, das aus Verschleiß oder sonstigen veränderten Bedingungen resultiert, nicht sofort zu erkennen. Durch Wiederholung der Messungen, und Trainieren des erstellten Regressionsmodells - indem beispielsweise die Eingangsvariablen angepasst werden-, kann sichergestellt werden, dass die Bestimmung der Schüttgutfördermenge oder Schüttgutbeladung trotz Systemänderungen korrekt erfolgt.

Für die Erstellung des Regressionsmodells kann ein KI-Algorithmus verwendet werden, der schwach lernfähig und somit adaptiv ist, um sich an die individuellen Maschinencharakteristiken anpassen zu können. Das Regressionsmodell in Form einer mathematischen Gleichung selbst stellt einen Arbeitsalgorithmus dar.

Eine vorteilhafte Ausgestaltung des erfindungsgemäßen Verfahrens sieht zudem vor, dass für das Erstellen des Regressionsmodells nur Eingangsvariablen verwendet werden, die eine hohe Korrelation zu dem Referenzsignal oder Referenzlastsignal der Schüttgutfördermenge oder Schüttgutbeladung haben. Hierbei wird mit Hilfe einer Korrelationsberechnung bestimmt, welche Eingangsvariablen für das Regressionsmodel geeignet sind.

Eine Ausgestaltung des erfindungsgemäßen Verfahrens sieht vor, dass das Regressionsmodell Variablen in der Form C1*X1+C2*X2+C3*X2^2...CN*Xn^n verwendet, wobei die Eingangsvariablen X basierend auf den Merkmalsdatensätzen als lineare oder nichtlineare Faktoren und/oder unter Verwendung von Koeffizienten C1, C2,..;CN ≥0 berücksichtigt werden.

Um das erfindungsgemäße Verfahren zu validieren, kann das Regressionsmodell vorteilhafterweise anhand von Merkmalsdatensätzen überprüft werden, die bei der Erstellung des Modells nicht verwendet wurden. Historische Datensätze oder Merkmalsdatensätze werden somit aufgeteilt in Trainings- und Validierungsdatensätze.

Zur Bestimmung und Anzeige der Schüttgutfördermenge oder einer Schüttgutbeladung einer Schwingfördermaschine wird zudem mit der Erfindung eine Vorrichtung bereitgestellt, die geeignet ist, mit wenigstens einem Beschleunigungs-, Geschwindigkeits- oder Wegsensor, Rohmessdaten der Schwingfördermaschine zu erfassen. Weiterhin sieht diese Vorrichtung eine elektronische Auswerteeinheit vor, mit der die Rohmessdaten in wenigstens ein Merkmal bestehend aus einer richtungsbezogenen Schwingungsmessgröße aus der Liste: Amplitude, Frequenz, Phase verarbeitet werden.

Außerdem werden mittels der Auswertevorrichtung Merkmalssätzen bestehend aus wenigstens einem Merkmal und nachfolgend anhand dieser Merkmalsdatensätze ein Regressionsmodell erstellt. Die Vorrichtung weist zudem eine Anzeige oder ein Display auf, das die Schüttgutbeladung oder Schüttgutfördermenge der Schwingfördermaschine basierend auf dem erstellten Modell anzeigt.

Wie eingangs beschrieben, stellt die Ermittlung der Schüttgutbeladung oder Schüttgutfördermenge einer Schwingmaschine oder Schwingfördermaschine eine Herausforderung dar, da sich sowohl die Schüttgutmenge auf der Schwingmaschine als auch die Charakteristiken der Schwingmaschine fortwährend ändern können.

Dennoch stellt die Schüttgutbeladung oder Schüttgutfördermenge eine werthaltige Information dar. Neben der Funktion als Performance-Indikator für die Schwingmaschine, lässt diese auch einen Rückschluss auf eine mögliche Maschinenüberlastung, welche die Lebensdauer der Schwingmaschine beeinflusst, zu. Demgegenüber kann eine persistent geringe Schüttgutfördermenge auf eine nicht-effiziente Anlagenauslastung hindeuten. Das erfindungsgemäße Verfahren bietet dementsprechend gegenüber den bereits bekannten Verfahren den Vorteil, dass das tatsächliche Schwingverhalten der Schwingmaschine berücksichtigt wird. Dadurch kann einerseits das zugrundeliegende Regressionsmodell fortwährend angepasst werden, aber auch -wenn Anpassungen des Regressionsmodells oder Algorithmus notwendig werden - Fehlfunktionen im Schwingverhalten festgestellt werden.

Das erfindungsgemäße Verfahren wird nachstehend anhand eines Prozessschaubilds näher erläutert, wobei weitere Merkmale und Vorteile der Erfindung offenbart werden.

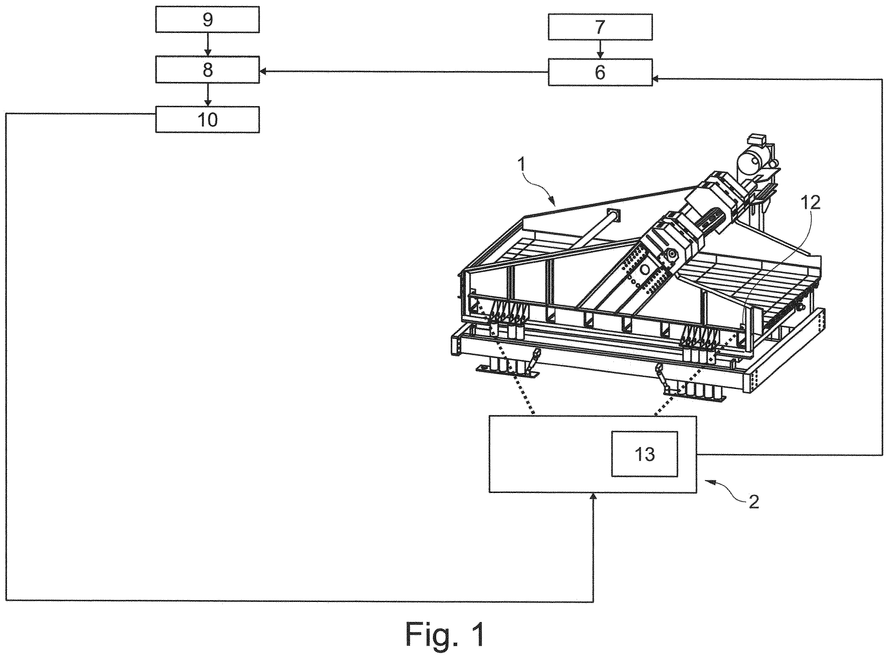

Es zeigt
- Fig. 1: eine schematische Darstellung der Abläufe des erfindungsgemäßen Verfahrens.

In Fig. 1 ist schematisch das erfindungsgemäße Verfahren zum Berechnen der Schüttgutfördermenge einer Schwingmaschine 1 in Form eines Schwingsiebs dargestellt. An der Schwingmaschine 1 ist wenigstens ein Sensor 12 angebracht, der in Datenverbindung mit einer Recheneinheit einer Auswerteeinrichtung 2 steht. Die Datenverbindung, die in der Figur gestrichelt dargestellt ist, kann über eine Funkverbindung, kabelgebundene Verbindung, über eine permanente oder temporäre Verbindung erfolgen. Die von dem Sensor 12 gelieferten Messdaten werden in der Recheneinheit zu Merkmalsdatensätzen 13 verarbeitet und gespeichert. Aus den Merkmalsdatensätzen 13, die als Eingangsvariablen dienen und Referenzsignalen 7, die aus einem vorgelagerten oder separaten Messprozess der Schüttgutbeladung stammen, wird ein Regressionsmodell 6 gebildet. Das auf den Merkmalsdatensätzen 13 beruhende Regressionsmodell 6 wird mit Merkmalsdatensätzen 9, die nicht zur Erstellung des Modells gedient haben, validiert und trainiert.

Das validierte Regressionsmodell 8 wird anschließend in eine Software 10 übertragen und auf die Auswerteinrichtung 2 überspielt, um dort die Berechnung der Schüttgutbeladung anzuzeigen.

## Patentansprüche

1. Verfahren zur Berechnung von Schüttgutfördermenge oder Schüttgutbeladung einer Schwingfördermaschine (1), bei dem:
a) Rohmessdaten der Schwingfördermaschine (1) mit wenigstens einem Beschleunigungs- , Geschwindigkeits-oder Wegsensor (12) zu wenigstens zwei Zeitpunkten mit unterschiedlichen Beladezuständen erfasst werden,
b) Rohmessdaten in wenigstens ein Schwingungsdatenmerkmal aus der Liste: Amplitude, Frequenz, Phase verarbeitet werden, mit folgende Schritte:
c) Erstellen und Speichern von Merkmalsdatensätzen (13) bestehend aus wenigstens einem Schwingungsdatenmerkmal,
d) Erstellen eines Regressionsmodells (6) anhand der gespeicherten Merkmalsdatensätze (13), **gekennzeichnet durch** den Schritt:
e) Ermittlung und Anzeige der aktuellen Ist-Beladung der Schwingfördermaschine (1) auf Basis des erstellten Regressionsmodells (6) und wenigstens eines aktuellen Merkmalsdatensatzes (13).

2. Verfahren nach Anspruch 1, **dadurch gekennzeichnet, dass** der Schritt d) Erstellen des Regressionsmodells (6) nach einem Zeitraum Δt, nach dem Auftreten von Verschleiß an der Schwingfördermaschine (1), nach Instandhaltungsmaßnahmen und/oder nach sonstigen Systemänderungen wie Änderung der Beladung, der Maschinenkomponenten, der Antriebseigenschaften oder Materialeigenschaften wiederholt wird.

3. Verfahren nach Anspruch 1 oder 2, **dadurch gekennzeichnet, dass** das Schritt a) Erfassen der Rohmessdaten zumindest bei 0% Schüttgutbeladung und 100% Nennlast-Schüttgutbeladung, erfolgt.

4. Verfahren nach einem der vorhergehenden Ansprüche, **dadurch gekennzeichnet, dass** zum Trainieren des Regressionsmodells (6) die modellbasierten Schüttgutbeladungswerte mit einem Referenzsignal oder Referenzlastsignal der Schüttgutfördermenge oder Schüttgutbeladung abgeglichen werden.

5. Verfahren nach Anspruch 4, **dadurch gekennzeichnet, dass** das Referenzlastsignal oder Referenzsignal, ein Kraftmesssignal oder ein Motorstromsignal ist, das aus einem vorgeschalteten, alternativen oder indirekten Messvorgang der Schüttgutfördermenge oder Schüttgutbeladung resultiert.

6. Verfahren nach einem der Ansprüche 4 oder 5, **dadurch gekennzeichnet, dass** für das Trainieren des Regressionsmodells (6) nur Vorhersagevariablen verwendet werden, deren modellbasierter Schüttgutbeladungswert eine hohe Korrelation zu dem Referenzlastsignal der Schüttgutfördermenge oder Schüttgutbeladung hat.

7. Verfahren nach einem der vorhergehenden Ansprüche, **dadurch gekennzeichnet, dass** in der Trainingsphase des Regressionsmodells (6) ein multivariates Regressionsverfahren eingesetzt wird.

8. Verfahren nach Anspruch 7, **dadurch gekennzeichnet, dass** das Regressionsmodell in der Form C1*X1+C2*X2+C3*X2^2...CN*Xn^n = Schüttgutbeladung gebildet wird, wobei die Vorhersagevariablen X als lineare oder nichtlineare Faktoren und/oder unter Verwendung von Koeffizienten C1, C2,..;CN ≥0 berücksichtigt werden.

9. Verfahren nach einem der vorhergehenden Ansprüche, **dadurch gekennzeichnet, dass** das Regressionsmodells (6) anhand von Merkmalsdatensätzen (13) validiert wird, die nicht für das Trainieren des Regressionsmodells verwendet wurden.

10. Vorrichtung zur Bestimmung einer Schüttgutfördermenge oder einer Schüttgutbeladung einer Schwingfördermaschine (1), mit
- wenigstens einem Beschleunigungs- , Geschwindigkeits- oder Wegsensor (12), der zum Erfassen von Rohmessdaten der Schwingfördermaschine (1) angeordnet ist
- einer elektronischen Auswerteeinheit (2) zum
- - Verarbeiten der Rohmessdaten in wenigstens ein Merkmal bestehend aus einer richtungsbezogenen Schwingungsmessgröße aus der Liste: Amplitude, Frequenz, Phase
- - Erstellen von Merkmalssätzen (13) bestehend aus wenigstens dem einen Merkmal
- - Erstellen eines Regressionsmodells (6) anhand der gespeicherten Merkmalsdatensätze (13),
**dadurch gekennzeichnet, dass** die Vorrichtung eine Anzeige oder ein Display beinhaltet, das einen modellbasierten Schüttgutbeladungswert oder modellbasierte Schüttgutfördermenge der Schwingfördermaschine (1) anzeigt.

## Claims

1. A method for calculating the bulk material feed rate or the bulk material loading of a vibratory conveyor machine (1), wherein:
a) raw measurement data of the vibratory conveyor machine (1) are recorded with at least one acceleration, velocity or displacement sensor (12) at at least two points in time with different loading states,
b) raw measurement data are processed into at least one vibration data feature from the list: Amplitude, frequency, phase, with the following steps:
c) create and store feature data sets (13) consisting of at least one vibration data feature,
d) create a regression model (6) using the stored feature datasets (13), **characterized by** the step:
e) determination and display of the current actual load of the vibratory conveyor machine (1) based on the created regression model (6) and at least one current feature data set (13).

2. The method according to claim 1, **characterized in that** the step d) of creating the regression model (6) is repeated after a period of time Δt, after the occurrence of wear on the vibratory conveyor machine (1), after maintenance measures and/or after other system changes, such as change of the loading, the machine components, the drive properties or of material properties.

3. The method according to any of claims 1 or 2, **characterized in that** the step a) of acquisition of the raw measurement data is carried out at least at 0% bulk material loading and 100% nominal load bulk material loading.

4. The method according to any one of the preceding claims, **characterized in that**, for training of the regression model (6), the model-based bulk material loading values are matched with a reference signal or reference load signal of the bulk material conveyor quantity or bulk material loading.

5. The method according to claim 4, **characterized in that** the reference load signal or reference signal is a force measurement signal or a motor current signal resulting from an upstream, alternative or indirect measurement process of the bulk material feed rate or bulk material load.

6. The method according to any one of claims 4 or 5, **characterized in that** for training of the regression model (6) only forecasting variables are used whose model-based bulk material loading value has a high correlation to the reference load signal of the bulk material conveyor quantity or bulk material loading.

7. The method according to any one of the preceding claims, **characterized in that** a multivariate regression method is used in the training phase of the regression model (6).

8. The method according to claim 7, **characterized in that** the regression model is created in the form C1*X1+C2*X2+C3*X2^2.... CN*Xn^n = bulk loading, wherein the forecasting variables X are considered as linear or nonlinear factors and/or by using coefficients C1, C2,...;CN ≥0.

9. The method according to any of the preceding claims, **characterized in that** the regression model (6) is validated using feature data sets (13) that have not been used for training the regression model.

10. A device for the determination of a bulk material conveyor quantity or a bulk material load of a vibratory conveyor machine (1), comprising
- at least one acceleration sensor, velocity sensor or route sensor (12) arranged to acquire raw measurement data of the vibratory conveyor machine (1),
- an electronic evaluation unit (2) for
- processing the raw measurement data into at least one feature consisting of a directional vibration measurand from the list: Amplitude, frequency, and phase
- creating feature sets (13) consisting of at least the one feature,
- creating a regression model using the stored feature datasets (13),
**characterized in that** the device comprises a screen or a display showing a model-based bulk material load value or model-based bulk material feed rate of the vibratory conveyor machine (1).

## Revendications

1. Procédé de calcul du débit de marchandises en vrac ou de la charge de marchandises en vrac d'une machine de transport vibrante (1), dans lequel :
a) des données de mesure brutes de la machine de transport vibrante (1) sont enregistrées par au moins un capteur d'accélération, de vitesse ou de déplacement (12) à au moins deux instants présentant des états de charge différents,
b) des données de mesure brutes sont traitées relativement à au moins une caractéristique de données de vibration parmi : amplitude, fréquence, phase, grâce aux étapes ci-dessous consistant à :
c) créer et stocker des ensembles de données de caractéristiques (13) constitués d'au moins une caractéristique de données de vibration,
d) créer un modèle de régression (6) à l'aide des ensembles de données de caractéristiques (13) stockés, **caractérisé par** l'étape consistant à :
e) déterminer et afficher la charge réelle actuelle de la machine de transport vibrante (1) sur la base du modèle de régression (6) créé et d'au moins un ensemble de données de caractéristiques (13) actuel.

2. Procédé selon la revendication 1, **caractérisé en ce que** l'étape d) de création du modèle de régression (6) est répétée après une période Δt, après l'apparition d'une usure sur la machine de transport vibrante (1), après des mesures de maintenance et/ou après d'autres modifications de système telles que la modification de la charge, des composants de la machine, des propriétés d'entraînement ou des propriétés de matériau.

3. Procédé selon la revendication 1 ou 2, **caractérisé en ce que** l'étape a) d'enregistrement des données de mesure brutes intervient au moins à 0 % de charge de marchandises en vrac et à 100 % de charge de marchandises en vrac en charge nominale.

4. Procédé selon l'une quelconque des revendications précédentes, **caractérisé en ce que** les valeurs modélisées de charge de marchandises en vrac sont comparées à un signal de référence ou à un signal de charge de référence du débit de marchandises en vrac ou de la charge de marchandises en vrac afin de développer le modèle de régression (6),

5. Procédé selon la revendication 4, **caractérisé en ce que** le signal de charge de référence ou le signal de référence est un signal de mesure de force ou un signal de courant de moteur qui résulte d'une opération de mesure, indirecte, alternative ou située en amont, du débit de marchandises en vrac ou de la charge de marchandises en vrac.

6. Procédé selon l'une quelconque des revendications 4 ou 5, **caractérisé en ce que** seules des variables de prévision dont la valeur modélisée de charge de marchandises en vrac présente une forte corrélation avec le signal de charge de référence du débit de marchandises en vrac ou de la charge de marchandises en vrac sont utilisées pour développer le modèle de régression (6).

7. Procédé selon l'une quelconque des revendications précédentes, **caractérisé en ce qu'**un procédé de régression multivariée est utilisé lors de la phase de développement du modèle de régression (6).

8. Procédé selon la revendication 7, **caractérisé en ce que** le modèle de régression est formé sous la forme C1*X1+C2*X2+C3*X2^2...CN*Xn^n = charge de marchandises en vrac, dans lequel les variables de prévision X sont considérées comme des facteurs linéaires ou non linéaires et/ou sont utilisés avec des coefficients C1, C2, ..., CN ≥ 0.

9. Procédé selon l'une quelconque des revendications précédentes, **caractérisé en ce que** le modèle de régression (6) est validé à l'aide des ensembles de données de caractéristiques (13) qui n'ont pas été utilisés pour le développement du modèle de régression.

10. Dispositif permettant de déterminer un débit de marchandises en vrac ou une charge de marchandises en vrac d'une machine de transport vibrante (1), comprenant
- au moins un capteur d'accélération, de vitesse ou de déplacement (12) agencé de manière à enregistrer des données de mesure brutes de la machine de transport vibrante (1)
- une unité d'évaluation électronique (2) permettant de
-- traiter les données de mesure brutes relativement à au moins une caractéristique constituée d'une grandeur de mesure de vibration se rapportant à la direction parmi : amplitude, fréquence, phase
-- créer des ensembles de caractéristiques (13) constitués d'au moins une caractéristique
-- créer un modèle de régression (6) à l'aide des ensembles de données de caractéristiques (13) stockés,
**caractérisé en ce que** le dispositif contient un affichage ou un écran qui indique une valeur modélisée de charge de marchandises en vrac, ou un débit modélisé de marchandises en vrac, de la machine de transport vibrante (1).
